# EUROPEAN PATENT APPLICATION

(11) **EP 0 545 503 A1**
(43) Date of publication of application: **09.06.1993**
(21) Application number: 92203758.5
(22) Date of filing: 04.12.1992
(51) Int. Cl.: C02F 1/28

(54) **Process for removing heavy metals from aqueous effluents**

(30) Priority: 06.12.1991 IT MI913277
(71) Applicant: ENIRICERCHE S.p.A., I-20121 Milan (IT)
(72) Inventor: Sbardellati, Rosa, I-00100 Rome (IT); Faggian, Lucio, I-20097San Donato Milanese (Milan) (IT); Crescenzi, Francesco, I-00146 Rome (IT); Robertiello, Andrea, I-00131 Rome (IT)
(74) Representative: Fusina, Gerolamo

(57) **Abstract**

A process is described for removing and recovering heavy metals from aqueous effluents by treating said effluents with an oxidized coal activated with mineral acids.

## Description

This invention relates to a process for removing and/or recovering heavy metals from aqueous effluents.

During recent years the removal and recovery of heavy metals from industrial effluents has assumed considerable importance both for ecological and economical reasons.

Satisfying the concentration limits imposed by law, especially for toxic and bioaccumulable metals, requires careful control and treatment upstream of the effluent outflow point, this representing a considerable cost for the industry concerned.

The problem of treating a considerable volume of water containing metal contaminants is not easily solved, neither from the technical nor in particular from the economical viewpoint.

The processes currently most commonly used can be essentially divided into chemical and physical processes.

Chemical precipitation is the removal method most used in purification plants (see J.W. Patterson: Waste Water Treatment Technology 2nd ed., Butterworth Publishers 1985).

Said precipitation can be effected using the most common precipitating agents with consequent conversion of the metals into hydroxides, carbonates, phosphates (J.W. Patterson: idem) and sulphides (F. Mazzocco: Inquinamento vol. 7/8, pp. 145-153, 1977).

The treatment is commonly effected in batch using calcium oxide or hydroxide, at low cost at least in terms of chemicals, and with relatively simple control operations. The more efficient and effective precipitation of the metals as carbonates, phosphates and sulphides is more complicated than as hydroxides. This is mainly due to the poor sedimentation of these salts, with consequent solid-liquid separation difficulties.

However this problem is commonly overcome in treatment plants by using flocculating agents (such as iron salts or polyaluminium chloride).

In the case of sulphate precipitation, not only must the sedimentation be controlled but above all the excess reactant must be removed to avoid its presence in the effluent or prevent the formation of hydrogen sulphide. Chemical precipitation has however the drawback of producing enormous quantities of sludge which, after dehydration post-treatment, has to be stabilized and suitably located in controlled dumps (IIB) (D.P.R. 10 September 1982, No. 915), at very high disposal cost.

Metal removal processes of chemical-physical type have recently been developed and applied, based on the use of ion exchangers (R.R. Grinstead and H.H. Paalman: Environmental Progress 8, 1, 1989) and solid-phase adsorbents (E.A. Sigworth and S.B. Smith: A.J.W.W.A. Vol. 6, 66, page 386, 1973).

The considerable advantage of these methods is that they can treat large effluent volumes of low metals content.

In addition, the concentrated metal stream, obtained by successive washing of the resins, can in some cases be recycled to the production process. However from the economical viewpoint, the resins are of high cost and their life is strongly influenced by the chemical and physical characteristics of the effluent. For example, in the case of acid effluents the resins can undergo wash-out imputable to the greater affinity of the proton over all the other cations which may be present in the effluent.

Finally, particular types of activated charcoal are able to remove up to 94-95% of metals from industrial effluents. This treatment system is not yet in widespread use as it is very costly.

USA patent 4,788,360 describes a method for preparing partially oxidized coal (Cox) useful for producing humic substances.

This method involves the dry oxidation of coal having a particle size of between 100 microns and 3 mm in an air or oxygen atmosphere, at a temperature of between 150 and 300°C in a fluidized bed reactor.

It has now been found that by subjecting said oxidized coal to an activation process, a material is obtained which is able to complex and adsorb heavy metal ions.

This material derived from the activation of oxidized coal (for simplicity defined as CoxA) has many advantages over the known art, and overcomes its drawbacks.

In particular, being an easily sedimentable solid, it can be separated from the aqueous stream by simple sedimentation. In addition, because of its poor solubility, it does not release substances into the water which by virtue of their quality and quantity are damaging to the environment.

In accordance therewith, a first aspect of the present invention relates to a process for removing and/or recovering heavy metals from aqueous solutions, consisting off:
- a step involving activation of a carbon-containing substance;
- a step involving contact between said thus activated carbon-containing substance and the aqueous solution contaminated with heavy metal ions, possibly followed by a step involving neutralization with alkaline-earth metal oxides or hydroxides;
- a step involving the disposal of said carbon-containing substance containing the metals;
   characterised in that:
- the step involving activation of the carbon-containing substance consists of treating an oxidized coal with an aqueous solution of a mineral acid.

The term "oxidized coal" signifies a coal which has undergone the oxidation process described in USA 4,788,360.

It has now been found, and constitutes a further aspect of the present invention, that by subjecting the coal partial oxidation product (Cox) obtained in this manner to an activation process using aqueous mineral acid solutions, the resultant material (CoxA) acquires the ability to complex and adsorb heavy metals present in solution.

The oxidized coal is activated by contact with an aqueous solution of a mineral acid having a concentration of between 0.05 and 3 moles per litre, at a temperature of between 10 and 40°C.

The weight ratio of aqueous acid solution to oxidized coal is not a determining factor. Indicatively however, said ratio is between 1/1 and 50/1 and preferably between 2/1 and 30/1.

The complexing capacity of the activated oxidized coal is not substantially influenced by the nature of the mineral acid. It is however preferable to use aqueous sulphuric acid solutions of concentration between 0.05 and 3 moles/litre.

During the activation treatment. the Cox-acid mixture is maintained under slight agitation for a period of between 60 and 120 minutes. At termination of the contact step, the activated Cox (CoxA) can be separated from the supernatant by simple decanting or filtration and then dried.

Drying can be achieved by subjecting the activated product to an air stream at ambient temperature for a time of between 6 and 12 hours.

The dried activated product (CoxA) obtained can be used for removing and/or recovering from aqueous effluents toxic and bioaccumulable heavy metals pertaining to groups IB, IIB, IIA and IVA, such as Pb, Cd, Ag, Hg and Cr, metals for which very restrictive concentration levels have been imposed by law.

More specifically, it has been found that the CoxA is a complexing-adsorbent agent which acts in the solid state by sequestering metals present as ions in aqueous solutions.

Depending on the nature of the heavy metal present in solution, the CoxA acts within a pH range of 2-6.9 and preferably of 2.5-6.0.

This latter pH range is preferable because it allows virtually no release of organic material into the water.

Consequently it is sometimes necessary to adjust the pH of the effluent to be treated by adding acids or bases.

If the CoxA, in a quantity of between 0.25 and 10 grams/litre depending on the quantity of metal present in solution, is suspended under light agitation at a temperature of about 15-17°C in the liquid effluent to be treated, the adsorption-complexing reaction is complete within a time of between 0.5 and 10 hours, and usually between 1 and 4 hours.

The process can be operated at higher temperatures, but it is not advisable to exceed about 40°C.

On treatment termination, the CoxA can be separated by simple decanting or filtration, dried with air and then disposed of by combustion and/or burial in a dump.

The liquid effluent thus purified and after possible neutralization with an alkaline-earth metal oxide or hydroxide, preferably calcium oxide, can be recycled as industrial water to the production cycle by which it has been generated, or be dispersed into a surface water body.

Finally, as any sludge produced during neutralization is free of heavy metals to a large extent, it is no longer toxic or harmful and is therefore not subject to disposal in type IIB dumps, with consequent lower cost and greater feasibility of disposal.

During the experimental work of the present invention, the activated oxidized coal was used under batch conditions, in that the insertion of an intermediate step of treatment with CoxA into an overall purification cycle appears more easy to integrate into a classical cycle of purification by chemical precipitation.

However the characteristics of the solid phase adsorbent of the present invention are such as to allow it to be used in reactors comprising a fixed bed of activated oxidized coal (CoxA).

The following experimental examples are provided to better illustrate the present invention.

### EXAMPLE 1

Coal of Sulc is origin having a particle size of between 200 and 600 microns is subjected to continuous oxidation at a temperature of about 220°C with a residence time of 13.4 hours and an air pressure of 7 ata, in the manner described in USA 4,788,360.

100 grams of oxidized coal (Cox) obtained in this manner are placed in a reactor fitted with a mechanical agitator and suspended in 2 litres of a known-concentration solution of sulphuric acid in deionized water. The suspension obtained is left at a temperature of between 17 and 20°C under light agitation for about 2 hours.

After this period agitation is halted, the CoxA is allowed to sediment for 15 minutes and the supernatant is removed. The solid residue is subjected to three consecutive washes with deionized water until sulphate ions disappear from the wash liquid. Each wash is conducted by maintaining the suspension under light agitation for 1 hour, on termination of which the supernatant is separated from the solid by decanting. After the third wash the activated oxidized coal is recovered and dried in a stream of air at 25°C for 72 hours, obtaining 95 grams of CoxA.

Table 1 shows data on the composition of the starting oxidized coal and of the CoxA obtained by acid treatment.

**TABLE 1**

| Sample | C% | H% | N% | S% | O% |
|---|---|---|---|---|---|
| Cox as such | 52.9 | 0.50 | 3.3 | 7.5 | 35.8 |
| CoxA 1 | 53.2 | 0.82 | 3.3 | 7.2 | 35.0 |
| CoxA 2 | 54.9 | 0.91 | 3.4 | 7.0 | 33.7 |
| CoxA 3 | 53.4 | 0.88 | 3.5 | 7.1 | 35.6 |
| NB: The CoxA 1 was prepared by treatment with a 0.5N sulphuric acid solution, the CoxA 2 with a 1N solution and the CoxA 3 with a 6N solution. | | | | | |

### EXAMPLE 2

American "Rosebund" coal (Montana, USA) having a particle size of between 200 and 600 microns is subjected to continuous oxidation at about 185°C with a residence time of 8.9 hours and an air pressure of 7 ata, in the manner described in USA 4,788,360.

100 grams of oxidized coal obtained in this manner are placed in a reactor fitted with a mechanical agitator and suspended in 2 litres of a 1N solution of sulphuric acid in deionized water. The suspension obtained is left at a temperature of between 17 and 20°C under light agitation for about 2 hours.

After this period agitation is halted, the CoxA is allowed to sediment for 15 minutes and the supernatant is removed. The solid residue is subjected to three consecutive washes with deionized water. Each wash is conducted by maintaining the suspension under light agitation for 1 hour, on termination of which the supernatant is removed from the solid by decanting.

After the third wash the CoxA is dried in a stream of air at 25°C for 72 hours, obtaining 90 grams of CoxA 4.

Table 2 shows data on the composition of the starting material (Cox) and of the material obtained by acid treatment (CoxA 4).

**TABLE 2**

| Sample | C% | H% | N% | S% | O% |
|---|---|---|---|---|---|
| Cox as such | 60.70 | 0.54 | 1.90 | 0.68 | 36.20 |
| CoxA 4 | 63.0 | 0.98 | 1.97 | 0.64 | 33.40 |

### EXAMPLE 3

The synthetic effluent used contains lead at a concentration similar to those encountered in effluents from Pb/PbO battery production plants (11 mg/litre).

It was prepared with a concentrated standard solution of lead nitrate in nitric acid and deionized water.

The natural pH of this synthetic effluent, namely 1.5, is corrected to the optimum treatment pH of 4 ± 0. 5, by adding basic agents.

Before treating the effluent obtained in this manner with CoxA, a sample at pH 4 is withdrawn and analyzed in terms of free lead to check for precipitation of lead hydroxide.

The results obtained show that lead hydroxide is not formed within the pH range examined.

0.5 grams of "Sulcis" CoxA, obtained as described in Example 1, are then suspended in 1 litre of the effluent containing 11 mg of lead.

After 2 hours of light agitation at ambient temperature, with the pH maintained constant at 4 by adding bases of known concentration, the suspension is left to decant for about 30 minutes.

On termination of sedimentation a sample of supernatant liquid is withdrawn and the residual liquid effluent is separated from the CoxA by decantation, is neutralized with Ca(OH)₂ and is analyzed.

Table 3 shows the results of the analysis of the samples withdrawn before and after treatment with the CoxA and on termination of purification after the final neutralization.

**TABLE 3**

| (data expressed in p.p.m.) | | | |
|---|---|---|---|
| | Effl. as such | Effl./CoxA | Purified effl. |
| pH | 4.0 | 4.0 | 8.0 |
| Pb | 11.00 | 0.5 | 0.15 |
| Cd | traces | traces | traces |
| As | traces | traces | traces |
| Hg | traces | traces | traces |
| COD | n.d. | 40 | 35 |

It should be noted that the sludge obtained after neutralization, being of low metals content, is not classifiable as toxic and noxious and is not subject to disposal in IIB-type dumps, in contrast to analogous sludge obtained by direct precipitation with calcium hydroxide.

### EXAMPLE 4

The effluent used, containing 10 mg/l of cadmium, reproduces in a simplified manner an effluent originating from the electroplating industry.

It is prepared by diluting with deionized water a standard solution of cadmium nitrate in nitric acid. The natural pH of the solution, namely 2.5, is corrected to 5 ± 0.5, by adding a basic agent.

A sample of the synthetic effluent is withdrawn and analyzed in terms of free cadmium to check for precipitation of cadmium hydroxide.

The results obtained show that cadmium hydroxide is not formed within the stated pH range.

2 grams of CoxA 2 of Sulcis origin, prepared as described in Example 1, are mixed with 1 litre of synthetic liquid effluent containing cadmium.

The suspension is maintained for 2 hours under light agitation at a temperature of 17-20°C, with the pH maintained at 5 by adding bases, after which the mixture is left to decant for 30-60 minutes.

After separating the spent CoxA, an aliquot of supernatant liquid is withdrawn for analysis in terms of free cadmium, while the residual effluent is subjected to a neutralization step by adding Ca(OH)₂.

A sample of the final supernatant, taken by decantation on termination of the neutralization step, is analyzed in terms of residual metal.

After drying in air, the spent CoxA 2 is a stable, "shovelable" solid with a metals content such that it can be easily disposed of.

Table 4 shows the results of the analysis of the samples withdrawn before and after treatment with the CoxA and on termination of purification after the final neutralization.

**TABLE 4**

| (data expressed in p.p.m.) | | | |
|---|---|---|---|
| | Effl. as such | Effl./CoxA | Purified effl. |
| pH | 2.5 | 5 | 8.0 |
| Pb | traces | traces | traces |
| Cd | 10.0 | 0.3 | 0.02 |
| As | traces | traces | traces |
| Hg | traces | traces | traces |
| COD | n.d. | 45 | 45 |

### EXAMPLE 5

The effluent used, containing 10 mg/l of silver, reproduces an effluent originating from spent photographic baths.

It is prepared by diluting with deionized water a standard solution of silver nitrate in nitric acid. The natural pH of the solution, namely 2.0, is corrected to 7 ± 0.5, by adding a basic agent.

A sample of the synthetic effluent obtained is analyzed in terms of free silver to check for precipitation of silver hydroxide.

The results obtained show that insoluble hydroxide is not formed within the examined pH range.

1 gram of CoxA 2 of Sulcis origin, prepared as described in Example 1, is mixed with 1 litre of synthetic liquid effluent.

After 2 hours of mixing at ambient temperature, with the pH maintained at 7 by adding bases, the suspension is left to decant for 30 minutes in a reactor under mechanical agitation.

On termination of treatment, analyses conducted on a synthetic effluent sample show a silver ion removal of 95%.

The spent CoxA 2 is separated from the supernatant by decantation and is thermally destroyed to recover the silver as oxide from the ash.

The quantity of silver recovered in this manner is 90-95% of that initially present in the effluent.

### EXAMPLE 6

One litre of industrial effluent originating from a company producing Pb/PbO batteries is treated with activated oxidized coal.

The natural pH of the effluent, namely 1.4, is corrected to 4 ± 0.5 by adding 1N NaOH. In this case the pH correction is necessarily made with NaOH instead of with calcium hydroxide to prevent precipitation of the sulphate present in the effluent at high concentration.

0.5 grams of CoxA 2 of Sulcis origin, obtained as described in Example 1, are then mixed with 1 litre of Pb-containing effluent in a reactor under mechanical agitation.

After 2 hours of mixing, the suspension is left to sediment for 30- minutes.

The effluent is separated by decantation and a sample is taken for analysis in terms of residual lead, whereas the remainder is neutralized and then again analyzed in terms of free metal (Table 5).

**TABLE 5**

| (data expressed in p.p.m.) | | | |
|---|---|---|---|
| | Effl. as such | Effl./CoxA | Purified effl. |
| pH | 1.4 | 4.0 | 7.0 |
| COD | 33.5 | 55 | 50 |
| SO₄-- | 3000 | 3000 | <1000 |
| Pb | 11.0 | 1.0 | 0.1 |

### EXAMPLE 7

The synthetic effluent used contains lead at a concentration similar to those encountered in effluents from Pb/PbO battery production plants (11 mg/litre). It was obtained from a standard solution of lead nitrate in nitric acid diluted with deionized water.

The natural pH of this synthetic effluent, namely 1.5, is corrected to the optimum treatment pH of 4 ± 0.5, by adding basic agents.

Before treating the effluent obtained in this manner with CoxA, a sample at pH 4 is withdrawn and analyzed in terms of free lead to check for precipitation of lead hydroxide.

The results of this analysis show that lead hydroxide is not formed within this pH range.

0.5 grams of activated oxidized coal of Rosebund origin, prepared as described in Example 2, are suspended in one litre of the aforesaid liquid effluent.

After 2 hours of light agitation at ambient temperature, with the pH maintained at 4 by adding a base, the suspension is left to decant for about 30 minutes.

The resultant liquid effluent separates by decantation, and an aliquot is withdrawn for analysis in terms of residual lead.

The remaining supernatant is neutralized with Ca(OH)₂ and after separating the sludge is subjected to analysis.

Table 6 shows the results of the analysis on the liquid effluent before and after treatment with the CoxA.

**TABLE 6**

| (data expressed in p.p.m.) | | | |
|---|---|---|---|
| | Effl. as such | Effl./CoxA | Purified effl. |
| pH | 1.5 | 4.0 | 8.0 |
| Pb | 11.00 | 0.8 | 0.2 |
| Cd | traces | traces | traces |
| As | traces | traces | traces |
| Hg | traces | traces | traces |
| COD | n.d. | 40 | 25 |

It should be noted that the sludge obtained after neutralization, being of low metals content, is not classifiable as toxic and noxious and is not subject to disposal in IIB-type dumps, in contrast to analogous sludge obtained by direct precipitation with calcium hydroxide.

## Claims

1. A process for removing and/or recovering heavy metals from aqueous solutions, consisting off:
- a step involving activation of a carbon-containing substance;
- a step involving contact between said thus activated carbon-containing substance and the aqueous solution contaminated with heavy metal ions, possibly followed by a step involving neutralization with alkaline-earth metal oxides or hydroxides;
- a step involving the disposal of said carbon-containing substance containing the metals;
characterised in that:
- the step involving activation of the carbon-containing substance consists of treating an oxidized coal with an aqueous solution of a mineral acid.

2. A process as claimed in claim 1, wherein the activation step consists of treating an oxidized coal with an aqueous sulphuric acid solution.

3. A process as claimed in claim 2, wherein the activation step is effected by bringing the oxidized coal into contact with an aqueous sulphuric acid solution having a concentration of between 0.05 and 3 moles per litre, at a temperature of between 10 and 40°C.

4. Carbon-containing material usable for complexing and adsorbing heavy metals from aqueous solutions in accordance with claim 1, prepared by treating oxidized coal with aqueous mineral acid solutions. 5. Carbon-containing material according to Claim 4, prepared by treating oxidized coal with aqueous sulphuric acid solutions.
